# DEMANDE DE BREVET EUROPEEN

(11) **EP 2 320 098 A1**
(43) Date de publication de la demande: **11.05.2011**
(21) Numéro de dépôt: 10188450.0
(22) Date de dépôt: 22.10.2010
(51) Int. Cl.: F16B 39/10

(54) **Procédé et dispositif de blocage d'un écrou de serrage d'une borne de distribution sur un réservoir de fluide**

(30) Priorité: 04.11.2009 FR 0957778
(71) Demandeur: L'Air Liquide Société Anonyme pour l'Etude et l'Exploitation des Procédés Georges Claude, 75007 Paris (FR)
(72) Inventeur: Gonzalez Mena, Antonio, 77120, Coulommiers (FR)
(74) Mandataire: De Cuenca, Emmanuel Jaime

(57) **Abrégé**

Dispositif comprenant un réservoir (1) de fluide, au moins une borne (2) de distribution dudit fluide fixée audit réservoir (1) par au moins un système de vis et écrou (3b) comprenant une vis (3a) rendue solidaire du réservoir (1) selon un axe (3c) de direction déterminée, un écrou et une pièce amovible de blocage (5) en rotation de l'écrou (3b) sur la vis (3a), caractérisé en ce que ladite pièce de blocage (5) comprend:
- une première portion placée autour dudit écrou (3a) et coopérant en butée avec ledit écrou (3b) ; et
- une seconde portion fixée au réservoir (1) ou à un élément fixe (4a) par rapport au réservoir (1), en au moins un point (7) distinct dudit axe (3c) de direction déterminée.

## Description

L'invention concerne un procédé et un dispositif de blocage d'un écrou de serrage d'une borne de distribution sur un réservoir de fluide.

Le fluide peut être notamment tout gaz industriel, sous forme gazeuse, liquide, en général sous pression, ou bien diphasique (avec une partie liquéfiée). Selon un cas particulier, le fluide est cryogénique, c'est à dire sous une forme totalement ou partiellement liquéfiée à très basse température. Par exemple, le fluide peut être de l'oxygène ou de l'azote liquide, avec un ciel gazeux. Le réservoir est alors un réservoir de type cryogénique.

Le réservoir peut éventuellement contenir plusieurs fluides, identiques ou non, dans des compartiments. Afin de permettre la distribution du ou des fluides, le réservoir peut comporter une ou plusieurs bornes destinées à laisser passer sélectivement le ou les fluides contenus. Elles sont en général connectées à des canalisations permettant de véhiculer le ou les fluides, ou bien elles représentent l'élément mâle d'un système de connexion mâle-femelle, du type « borne Parker ». Notamment dans le cas des réservoirs de fluides cryogéniques, ces bornes peuvent être fixées au réservoir par un système comprenant une vis fixée au réservoir, par exemple par soudage, et un écrou flottant. La fixation est réalisée selon un axe déterminé, qui est en fait l'axe de la vis et l'axe de rotation de l'écrou. L'écrou flottant entoure la borne et vient la plaquer sur la vis. En position serrée, l'écrou maintient la borne sur la vis, cette dernière étant elle-même fixée au réservoir.

Cet écrou est susceptible de se desserrer du fait des efforts qu'il subit, en particulier lors des remplissages du réservoir. Un système est nécessaire pour empêcher ce desserrage.

Un système connu de blocage consiste en un anneau de blocage, qui est une pièce usinée en acier inoxydable. Cet anneau de blocage est serré sur l'écrou par une vis. La fabrication de l'anneau étant complexe, ce système présente l'inconvénient d'être compliqué à mettre en oeuvre, donc onéreux.

Un problème à résoudre est donc de proposer un système de blocage de l'écrou d'une mise en oeuvre plus simple et moins coûteux.

La solution de l'invention est un dispositif comprenant un réservoir de fluide, au moins une borne de distribution dudit fluide fixée audit réservoir par au moins un système vis - écrou ayant un axe donné, la vis dudit système vis-écrou étant solidaire du réservoir, et une pièce de blocage de l'écrou dudit système vis - écrou en rotation, amovible, caractérisé en ce que ladite pièce de blocage :
- est placée autour dudit écrou et coopère avec ledit écrou ; et
- est fixée au réservoir, ou à un élément fixe par rapport au réservoir, en au moins un point distinct dudit axe donné.

En particulier, l'invention propose un dispositif comprenant un réservoir de fluide, au moins une borne de distribution dudit fluide fixée audit réservoir par au moins un système de vis et écrou comprenant une vis rendue solidaire du réservoir selon un axe de direction déterminée, un écrou et une pièce amovible de blocage en rotation de l'écrou sur la vis, ladite pièce de blocage comprenant :
- une première portion placée autour dudit écrou et coopérant en butée avec ledit écrou; et
- une seconde portion fixée au réservoir ou à un élément fixe par rapport au réservoir, en au moins un point distinct dudit axe de direction déterminée.

Une pièce de blocage amovible est utilisée pour éviter le desserrage de l'écrou. Celle-ci est placée sur l'écrou en position serrée et coopère avec lui. Elle peut présenter une grande variété de formes, pourvu que ces formes réalisent les fonctions décrites ci-après. La pièce est telle que, lorsqu'elle n'est pas fixée au réservoir, on peut la translater au moins selon l'axe de l'écrou monté sur la vis, qui se trouve en général être aussi celui de la borne de distribution. La pièce de blocage se situe autour de l'écrou, avec suffisamment de points de contact, aux jeux mécaniques près, pour être solidaire de l'écrou en rotation selon cet axe. Elle n'entoure pas nécessairement complètement l'écrou. Par solidaire en rotation, on veut dire que cette pièce ne peut tourner autour de l'axe de l'écrou sans que l'écrou tourne, et inversement. Du fait de l'existence de jeux mécaniques, nécessaires pour pouvoir translater la pièce sur l'écrou, une rotation infirme peut se produire. Cette rotation est négligeable par rapport à celle qui est nécessaire pour desserrer l'écrou.

Dans le dispositif selon l'invention, la pièce est fixée sélectivement au réservoir par au moins un point distinct de l'axe de l'écrou. Par sélectivement, on veut dire que la pièce, est fixée au réservoir, mais que cette fixation est réversible. Par exemple, la pièce est vissée au réservoir et non pas soudée. La pièce est fixée au réservoir ou à un élément lui-même fixe par rapport au réservoir. La fixation se fait en au moins un point de la pièce qui de préférence n'est pas situé sur l'axe de l'écrou. Ce point, situé à une certaine distance de l'axe de rotation de l'écrou, permet de développer un certain bras de levier. La fixation a pour fonction d'empêcher la rotation de la pièce selon l'axe de l'écrou. L'écrou, étant solidaire en rotation de la pièce, ne peut pas tourner. Enfin, la pièce est amovible en ce sens que, si on défait la fixation, on peut enlever cette pièce par translation selon l'axe de l'écrou. La pièce doit présenter une solidité suffisante pour résister aux efforts en rotation et à ceux dus à sa fixation.

Par ailleurs, selon des modes de réalisation particuliers, l'invention peut comporter l'une ou plusieurs des caractéristiques suivantes :
- les première et seconde portions de la pièce de blocage sont situées dans des plans de fixation distincts et perpendiculaires à l'axe de direction déterminée.
- la pièce de blocage est gauchie, courbée ou pliée pour disposer les première et seconde portions à des niveaux différents selon une direction parallèle à l'axe de direction déterminée.
- les première et seconde portions de la pièce de blocage ont chacune une forme générale plane et sont situées dans des plans distincts, les première et seconde portions étant reliées par une zone intermédiaire faisant un angle avec les plans desdites première et seconde portions.
- les première et seconde portions sont situées dans des plans respectifs parallèles, la zone intermédiaire étant perpendiculaire auxdits plans des première et seconde portions.
- ladite pièce de blocage est une platine métallique, de préférence en acier inoxydable, d'épaisseur comprise entre 0,5 et 3 millimètres, comprenant une première ouverture permettant d'emmancher ladite pièce de blocage sur ledit écrou.
- ladite pièce de blocage comprend au moins une seconde ouverture de forme oblongue coopérant avec ledit élément fixe par rapport au réservoir.
- ladite fixation en au moins un point de ladite pièce de blocage au réservoir est assurée par un système de serrage comprenant une tige filetée fixée au réservoir et pourvue d'une première surface, un élément pourvu d'une seconde surface et vissé dans ou sur ladite tige filetée, ladite pièce de blocage étant serrée entre lesdites première et seconde surfaces, ladite tige filetée et/ou ledit élément traversant ladite seconde ouverture.
- ledit écrou a une forme polygonale régulière à N pans.
- ladite première ouverture présente une forme en étoile à 4N côtés réguliers.
- ladite seconde ouverture présente une ouverture angulaire θ par rapport audit axe donné strictement supérieure à 360 degrés divisés par 2N.

Selon un mode particulier, la pièce est en métal, de préférence inoxydable. Pour des raisons de simplicité et d'efficacité, elle sera de préférence réalisée à partir d'une tôle de faible épaisseur, entre 0.5 et 3 mm (millimètres), de préférence entre 1.0 et 1.4 mm. La pièce peut être plane. Elle peut aussi être gauchie ou pliée en différents endroits, par exemple pour faciliter sa fixation à un niveau différent de celui de l'écrou de serrage de la borne de distribution, ou pour la rendre plus solide.

La pièce peut présenter une première ouverture apte et destinée à assurer la solidarité en rotation avec l'écrou. Si l'ouverture est un trou, la pièce va entourer l'écrou. Si l'ouverture débouche sur un bord de la pièce, l'écrou ne sera que partiellement entouré.

La pièce peut présenter une seconde ouverture pour sa fixation par rapport au réservoir. Selon un mode particulier, la fixation se fait en serrant la pièce entre deux éléments, l'un fixe par rapport au réservoir, l'autre mobile et vissé dans ou sur le premier. Le premier peut par exemple être une tige filetée, fixée ou soudée au réservoir, passant au travers ou arrivant au moins au niveau de la seconde ouverture. Le second élément est alors vissé et vient appuyer sur la pièce de blocage au niveau du bord de la seconde ouverture. Dans le cas où la tige est traversante, elle comportera au moins un épaulement sur lequel la pièce vient reposer et contre lequel le second élément vient la coincer. Il est alors possible de placer la pièce à la fois sur l'écrou, avec un entourage de l'écrou total ou partiel, et sur la tige de fixation. Ensuite, l'élément de blocage de la fixation est sélectivement placé. La seconde ouverture peut être un trou ou bien peut déboucher sur un bord de la pièce de blocage ; dans ce cas, elle ressemble à une encoche faite dans la pièce de blocage.

Cette seconde ouverture a de préférence une forme oblongue, pour faciliter la mise en place de la pièce, notamment dans le cas d'un écrou à pans et quelle que soit la position de cet écrou. Selon la géométrie de l'écrou et sa position, la pièce peut être enfilée sur l'écrou dans différentes positions angulaires en prenant comme référence l'axe de rotation de l'écrou. Une seconde ouverture de forme oblongue, et de préférence arquée, permet de choisir une position angulaire de la pièce de blocage telle qu'une tige de fixation puisse passer dans l'ouverture, sans avoir à bouger l'écrou, c'est à dire sans le serrer encore plus ou sans le desserrer. De manière alternative, ce n'est pas la tige, mais l'élément vissé dans ou sur la tige qui traverse la pièce de blocage par la seconde ouverture. Selon encore une autre possibilité, la tige et l'élément traversent la seconde ouverture, l'essentiel étant qu'ils puissent coincer la pièce de blocage.

Selon un mode particulier, l'écrou possède N pans réguliers, de préférence six (N = 6). La première ouverture est par exemple un trou en étoile régulière à 2N pointes (deux fois le nombre N), donc de préférence 12, et 4N côtés (quatre fois le nombre N) de même longueur, de préférence 24. L'écrou étant serré dans une position donnée, il y a 2N façons de placer la pièce sur l'écrou. La seconde ouverture doit posséder une ouverture angulaire par rapport à l'axe de l'écrou d'au moins 360° (degrés) divisés par 2N, soit au moins 30 degrés.

L'invention concerne également un procédé de blocage d'un écrou de serrage mettant en oeuvre un réservoir de fluide et une borne de distribution dudit fluide fixée audit réservoir par un système vis-écrou comprenant une vis solidaire du réservoir et ledit écrou et ayant un axe donné, ledit procédé étant caractérisé en ce qu'il comprend les étapes suivantes :
a) ledit écrou étant en position serrée, on place autour dudit écrou une pièce apte et destinée à être solidaire dudit écrou en rotation selon ledit axe donné ; et
b) on fixe ladite pièce au réservoir ou à un élément fixe par rapport au réservoir en au moins un point distinct dudit axe donné.

Selon des modes particuliers, le procédé met en oeuvre un dispositif tel que décrit plus haut.

Selon des particularités possibles :
- la pièce de blocage est une platine métallique, de préférence en acier inoxydable, d'épaisseur comprise entre 0,5 et 3 millimètres, la première portion comprenant une première ouverture prévue pour emmancher ladite pièce de blocage autour dudit écrou.
- la partie de la pièce disposée autour de l'écrou et le point de fixation de la pièce sur le réservoir sont situés respectivement dans des plans distincts perpendiculaires à l'axe.
- la pièce de blocage est gauchie, courbe ou pliée.

A l'étape a), l'écrou est en position serrée. On place alors une pièce de blocage sur l'écrou. La pièce est conformée de manière à être amovible, notamment en translation selon l'axe de l'écrou. La pièce est conformée de manière à être solidaire de l'écrou en rotation par rapport à l'axe de l'écrou.

A l'étape b), on fixe la pièce par au moins un de ses points, soit au réservoir directement, soit à un élément fixe par rapport à celui-ci. Ce point de fixation est situé en dehors de l'axe de rotation afin de créer un bras de levier pour mieux empêcher la rotation de la pièce par rapport à cet axe.

Par ailleurs, selon des modes de réalisation particuliers, l'invention peut comporter l'une ou plusieurs des caractéristiques suivantes :
- ladite pièce comprend au moins une seconde ouverture de forme oblongue,
- lors de l'étape b):
   - on pose ladite pièce sur une première surface appartenant à une tige filetée fixée au réservoir; et
   - on visse un élément dans ou sur ladite tige filetée, ledit élément comportant une seconde surface, de manière à coincer ladite pièce entre lesdites première et seconde surfaces ;
   - ladite tige filetée et/ou ledit élément traversant ladite seconde ouverture.
   - ledit écrou a une forme polygonale régulière à N pans ;
   - ladite première ouverture présente une forme en étoile définissant un nombre de côtés supérieur ou inférieur au nombre de pans de l'écrou;
   - ladite seconde ouverture présente une ouverture angulaire θ par rapport à un axe passant par le centre de la seconde ouverture compris entre 20 et 90 degrés et de préférence entre 30 et 60 degrés;
   - les étapes de pose de la pièce sur la première surface et de vissage d'un élément dans ou sur ladite tige filetée sont réalisées simultanément.

D'autres particularités et avantages apparaîtront à la lecture de la description ci-après, faite en référence aux figures, dans lesquelles :
- la figure 1 représente une vue en perspective d'un exemple de dispositif selon l'invention,
- la figure 2 représente une vue de dessus du même dispositif,
- la figure 3 représente un exemple de pièce de blocage appartenant au dispositif.

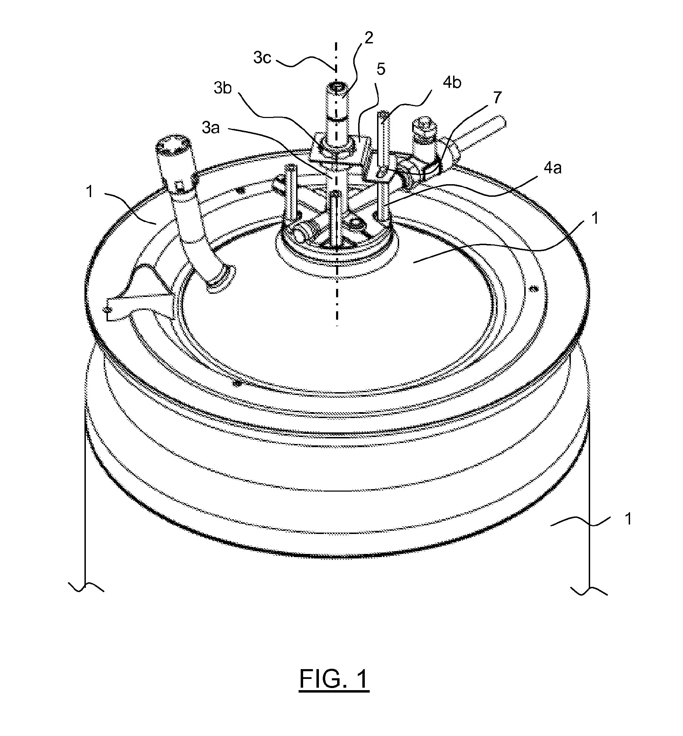

Sur la figure 1, on a représenté un réservoir 1 d'oxygène liquide dont on ne voit que la partie haute. Une borne 2 de type « Parker », en connexion avec le réservoir 1, permet de délivrer l'oxygène. Elle fonctionne comme une borne mâle sur laquelle on peut placer un second dispositif femelle. La borne 2 est fixée au réservoir par un écrou 3b, vissé sur un tube fileté 3a soudé au réservoir 1. L'écrou 3b tourne selon un axe 3c qui se trouve être aussi l'axe de symétrie de la borne 2. L'écrou 3b étant en position serrée, une pièce de blocage 5 est placée autour de l'écrou 3b en ce sens qu'elle possède une première ouverture 6 qui entoure l'écrou 3b. Cette première ouverture 6 est telle que la pièce 5 et l'écrou 3b sont solidaire en rotation autour de l'axe 3c. En un point 7, la pièce 5 est fixée à une tige 4a fixe par rapport au réservoir. Ce point 7 se trouve en dehors de l'axe 3c. Ainsi, la fixation empêche solidement, avec un bras de levier, la rotation de la pièce 5 autour de l'axe 3c. L'écrou 3b, étant solidaire de la pièce 5, ne tourne pas non plus selon l'axe 3c. Il ne peut plus se desserrer.

De manière plus précise, l'écrou 3b est par exemple régulier et à 6 pans et la première ouverture 6 possède une forme 6a en étoile à 12 pointes et 24 côté réguliers. Ainsi, il existe 12 façons, correspondant à 12 angles différents par rapport à l'axe 3c, de placer la pièce 5 sur l'écrou 3b. Ces positions diffèrent, l'une de la suivante, d'un angle de 30 degrés.

Sur la figure, 2, on retrouve une partie des éléments montrés par la figure 1. On voit aussi une seconde ouverture 8 ménagée dans la pièce 5. Cette ouverture possède une forme 8a oblongue, en arc centré sur l'axe 3c. La fixation au point 7 de la pièce 5 par rapport au réservoir 1 est obtenue en vissant un élément 4b dans la tige 4a. Ces deux éléments 4a et 4b possèdent chacun au moins une surface qui vient en contact avec la pièce 5 de part et d'autre de l'ouverture 8. La pièce 5 est coincée entre la tige 4a et l'élément 4b. L'élément 4b traverse l'ouverture 8 pour aller se visser dans la tige 4a. En position vissée, les deux surfaces des éléments 4a et 4b sont en contact avec la pièce 5 et la bloquent.

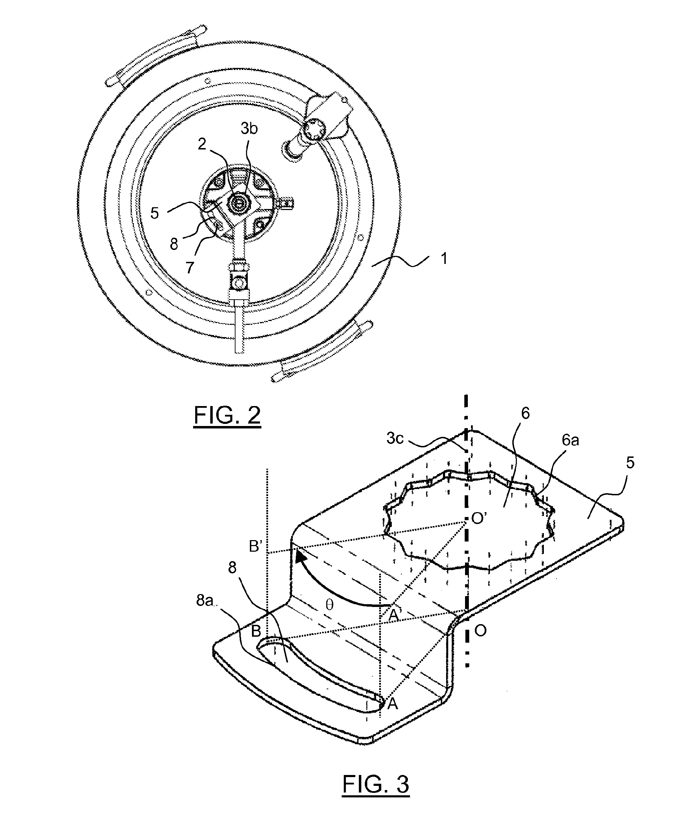

Sur la figure 3, on a représenté une pièce 5 faite à partir d'une tôle en inox d'épaisseur 1.2 mm. Cette tôle a été pliée en deux endroits pour que la seconde ouverture 8 soit plus basse que la première (voir aussi figure 1) afin de s'adapter à une forme particulière du réservoir 1. On y distingue mieux la forme étoilée 6a de la première ouverture 6 et la forme oblongue arquée 8a de la seconde ouverture 8. Vue depuis l'axe 3c, la forme 8a présente une ouverture angulaire d'au moins 30 degrés, de façon à ce qu'on puisse placer la pièce 5 sur l'écrou 3b et voir la tige 4a sous l'ouverture 8. Il ne reste plus ensuite qu'à visser l'élément 4b dans la tige 4a pour coincer la pièce 5. L'élément 4b traverse alors la pièce 5 au niveau de la seconde ouverture 8. L'écrou 3b traverse la pièce 5 au niveau de la première ouverture 6.

De manière alternative, on pourrait conformer la tige 4a différemment et la faire passer à travers la seconde ouverture 8. La première surface de blocage peut alors être un épaulement situé en dessous de l'extrémité de la tige 4a. La pièce 5 vient reposer sur cet épaulement. L'élément 4b, une fois vissé sur un filetage externe de la tige 4a, vient bloquer la pièce 5.

## Revendications

1. Dispositif comprenant un réservoir (1) de fluide, au moins une borne (2) de distribution dudit fluide fixée audit réservoir (1) par au moins un système de vis et écrou (3b) comprenant une vis (3a) rendue solidaire du réservoir (1) selon un axe (3c) de direction déterminée, un écrou et une pièce amovible de blocage (5) en rotation de l'écrou (3b) sur la vis (3a), **caractérisé en ce que** ladite pièce de blocage (5) comprend:
- une première portion placée autour dudit écrou (3a) et coopérant en butée avec ledit écrou (3b) ; et
- une seconde portion fixée au réservoir (1) ou à un élément fixe (4a) par rapport au réservoir (1), en au moins un point (7) distinct dudit axe (3c) de direction déterminée.

2. Dispositif selon la revendication 1, **caractérisé en ce que** les première et seconde portions de la pièce de blocage (5) sont situées dans des plans de fixation distincts et perpendiculaires à l'axe (3c) de direction déterminée.

3. Dispositif selon l'une quelconque des revendications 1 ou 2, **caractérisé en ce que** la pièce de blocage (5) est gauchie, courbée ou pliée pour disposer les première et seconde portions à des niveaux différents selon une direction parallèle à l'axe (3c) de direction déterminée.

4. Dispositif selon l'une quelconque des revendications 1 à 3, **caractérisé en ce que** les première et seconde portions de la pièce de blocage (5) ont chacune une forme générale plane et sont situées dans des plans distincts, les première et seconde portions étant reliées par une zone intermédiaire faisant un angle avec les plans desdites première et seconde portions.

5. Dispositif selon la revendication 4, **caractérisé en ce que** les première et seconde portions sont situées dans des plans respectifs parallèles, la zone intermédiaire étant perpendiculaire auxdits plans des première et seconde portions.

6. Dispositif selon l'une quelconque des revendications 1 à 5, **caractérisé en ce que** ladite pièce de blocage (5) est une platine métallique, de préférence en acier inoxydable, d'épaisseur comprise entre 0,5 et 3 millimètres, la première portion comprenant une première ouverture (6) prévue pour emmancher ladite pièce de blocage (5) autour dudit écrou (3b).

7. Dispositif selon l'une quelconque des revendications 1 à 6, **caractérisé en ce que** la seconde portion de ladite pièce de blocage (5) comprend au moins une seconde ouverture (8) de forme (8a) oblongue prévue pour coopérer le réservoir (1) ou avec ledit élément fixe (4a) par rapport au réservoir (1).

8. Dispositif selon la revendication 7, **caractérisé en ce que** la seconde portion de la pièce (5) de blocage est fixée audit point (7) via un système de serrage (4a, 4b) comprenant une tige filetée (4a) fixée au réservoir (1) et pourvue d'une première surface et un élément (4b) pourvu d'une seconde surface et vissé dans ou sur ladite tige filetée (4a), ladite pièce de blocage (5) étant serrée entre lesdites première et seconde surfaces, ladite tige filetée (4a) et/ou ledit élément (4b) traversant ladite seconde ouverture (8).

9. Dispositif selon la revendication 8, **caractérisé en ce que** :
- ledit écrou (3b) a une forme polygonale régulière à N pans ;
- ladite première ouverture (6) présente une forme (6a) en étoile définissant un nombre de côtés supérieur au nombre de pans de l'écrou (3b) ; et
- ladite seconde ouverture (8) présente une ouverture angulaire θ par rapport à un axe (3c) passant par le centre de la seconde ouverture (6) compris entre 20 et 90 degrés et de préférence entre 30 et 60 degrés.

10. Procédé de blocage d'un écrou (3b) d'un système à vis (3a) et écrou (3b) assurant la fixation d'une borne (2) de distribution de fluide sur un réservoir (1) de fluide, la vis (3a) ayant un axe (3c) de direction donnée, ledit procédé étant **caractérisé en ce qu'**il comprend les étapes suivantes :
a) ledit écrou (3b) étant en position serrée, on place autour dudit écrou (3b) une pièce (5) apte et destinée à être solidaire en rotation dudit écrou (3b) selon ledit axe (3c) ; et
b) on fixe ladite pièce (5) au réservoir (1) ou à un élément fixe (4a) par rapport au réservoir (1) en au moins un point (7) distinct dudit axe (3c).

11. Procédé selon la revendication 10, **caractérisé en ce que** la partie de la pièce (5) disposée autour de l'écrou (3b) et le point (7) de fixation de la pièce (5) sur le réservoir (1) sont situés respectivement dans des plans distincts perpendiculaires à l'axe (3c).

12. Procédé selon la revendication 10 ou 11, **caractérisé en ce que** la pièce de blocage (5) est gauchie, courbe ou pliée.

13. Procédé selon l'une quelconque des revendications 10 à 12, **caractérisé en ce que** ladite pièce (5) est une platine métallique d'épaisseur comprise entre 0,5 et 3 millimètres et que, à l'étape a) on emmanche ladite pièce (5) sur ou autour dudit écrou (3b) à travers une première ouverture (6) ménagée dans ladite pièce (5).

14. Procédé selon la revendication 13, **caractérisé en ce que** ladite pièce (5) comprend au moins une seconde ouverture (8) de forme (8a) oblongue et **en ce que** lors de l'étape b) :
- on pose ladite pièce (5) sur une première surface appartenant à une tige filetée (4a) fixée au réservoir (1) ; et
- on visse un élément (4b) dans ou sur ladite tige filetée (4a), ledit élément (4b) comportant une seconde surface, de manière à coincer ladite pièce (5) entre lesdites première et seconde surfaces ;
- ladite tige filetée (4a) et/ou ledit élément (4b) traversant ladite seconde ouverture (8).

15. Procédé selon la revendication 14, **caractérisé en ce que** :
- ledit écrou (3b) a une forme polygonale régulière à N pans ;
- ladite première ouverture (6) présente une forme (6a) en étoile définissant un nombre de côtés supérieur ou inférieur au nombre de pans de l'écrou (3b) ;
- ladite seconde ouverture (8) présente une ouverture angulaire θ par rapport à un axe (3c) passant par le centre de la seconde ouverture (8) compris entre 20 et 90 degrés et de préférence entre 30 et 60 degrés;
- les étapes de pose de la pièce (5) sur une première surface et de vissage d'un élément dans ou sur ladite tige filetée sont réalisées simultanément.
